# EUROPÄISCHE PATENTANMELDUNG

(11) **EP 1 890 250 A1**
(43) Veröffentlichungstag der Anmeldung: **20.02.2008**
(21) Anmeldenummer: 06119200.1
(22) Anmeldetag: 18.08.2006
(51) Int. Cl.: G06K 7/10, G06K 7/08, H01Q 19/30, H01Q 19/12, H01Q 19/19, H01Q 1/52

(54) **Transpondergate und zugehörige Gateantenne**

(71) Anmelder: TBN Identifikation und Netzwerke GmbH, 40721 Hilden (DE)
(72) Erfinder: Menke, Norbert, 45549 Sprockhövel (DE)
(74) Vertreter: Seiffert, Klaus

(57) **Zusammenfassung**

Die vorliegende Erfindung betrifft ein Transpondergate (10) bestehend aus mindestens einer Antenne (1) und einem in der Nähe der Antenne definierten Durchtrittsbereich (5), wobei die Antenne (1) dafür ausgelegt ist, die von einem den Durchtrittsbereich (5) durchquerenden Transponder (3) ausgehenden oder modifizierten, codierten Signale zu erfassen und an eine Auswerteelektronik (4) weiterzuleiten. Ebenso betrifft die vorliegende Erfindung auch eine entsprechende Gateantenne, mit der ein Transpondergate ausgerüstet ist.

Zur Lösung dieser Aufgabe wird erfindungsgemäß vorgeschlagen, daß der den Durchtrittsbereich (5) abdeckende Erfassungsbereich der Antenne (1) begrenzt ist durch zwei im Abstand voneinander auf den beiden Seiten des Durchtrittsbereichs (5) angeordnete Spiegel (2), die ein elektromagnetische Wellen reflektierendes Material aufweisen und von denen mindestens einer konkav ausgebildet ist und die mit ihren spiegelnden Seiten einander zugewandt sind, um dazwischen den Erfassungs- und Durchtrittsbereich zu definieren, wobei die mindestens eine Antenne in einem Brennpunktbereich des mindestens einen konkaven Spiegels (2) angeordnet ist während der andere Spiegel (2) entweder eben oder ebenfalls konkav ausgebildet ist

## Beschreibung

Die vorliegende Erfindung betrifft ein Transpondergate, bestehend aus mindestens einer Antenne und einem definierten Durchtrittsbereich, wobei die Antenne dafür ausgelegt ist, die von einem den Durchtrittsbereich durchquerenden Transponder ausgehenden oder modifizierten codierten Signale zu erfassen und an eine Auswerteelektronik weiterzuleiten. Ebenso betrifft die vorliegende Erfindung auch eine entsprechende Gateantenne, mit der das genannte Transpondergate ausgerüstet ist.

Entsprechende Transpondergates sind aus einer Vielzahl praktischer Anwendungen bekannt und dienen dazu, Transponder bzw. mit Transpondem versehene Gegenstände bei ihrem Durchtritt durch das Gate zu erfassen. Ein Transponder ist ein Bauteil, welches in der Lage ist, entweder selbst elektromagnetische Strahlung in codierter Form abzugeben oder aber elektromagnetische Strahlung zu empfangen und derart zu beeinflussen, daß die Strahlung in bestimmter Weise codiert wird und in dieser codierten Form von einer Antenne empfangen werden kann. Der Code kennzeichnet dabei den Transponder und damit gegebenenfalls auch den Gegenstand, an welchem der Transponder angebracht ist, in eindeutiger Weise oder ordnet diesen Gegenstand einer bestimmten Klasse von Gegenständen zu. Derartige Transponder werden zunehmend häufiger eingesetzt für logistische Zwecke in großen Lagern, in denen es wichtig ist, den gesamten Lagerbestand in möglichst einfacher Weise zu erfassen und auch den Lagerort nach Möglichkeit eindeutig zu lokalisieren. Um festzustellen und zu erfassen, wo sich ein mit einem Transponder versehener Gegenstand jeweils befindet, sind zu diesem Zweck beispielsweise an den Ein- und Ausgängen eines Lagers sogenannte Transpondergates vorgesehen und es können darüber hinaus entsprechende Transpondergates auch beispielsweise an jedem Anfang und Ende eines Ganges zwischen Regalen in einem Lager bzw. am Anfang und Ende von Lagerstraßen oder auch irgendwo entlang von Transportstrekken entsprechender Waren oder Gegenstände angeordnet sein. Auch Lesegeräte, die letztlich nichts anderes als halbierte und gegebenenfalls auch transportable Transpondergates sind, können verwendet werden, um unmittelbar an entsprechenden Lagerpositionen und in Regalen die Transponder bzw. die zugeordneten Gegenstände zu erfassen.

Zweckmäßigerweise sind die Transpondergates jeweils so ausgestaltet, daß sie auch die Richtung erfassen, in welcher sich ein gegebener Transponder durch das Gate hindurchbewegt. Dies kann zum Beispiel mit Hilfe von in Durchtrittsrichtung hintereinander angeordneten Antennen geschehen. Die sendende Antenne kann dabei gleichzeitig Empfangsantenne sein, es ist jedoch auch möglich, neben der sendenden Antenne auch eine oder mehrere davon unabhängige Empfangsantennen vorzusehen.

Die meisten Transponder sind vom passiven Typ, d.h. sie reagieren auf die von einer Antenne abgegebene, elektromagnetische Strahlung, indem sie die Strahlung in charakteristischer, d.h. codierter Weise modifizieren, wobei die Antenne diese modifizierte Strahlung wiederum empfängt und dadurch die Anwesenheit des Transponders in dem Erfassungsbereich des Transpondergates und seine Identität registriert. Diese Information wird dann an ein Lagerverwaltungssystem weitergegeben. Typischerweise besteht die Modifizierung darin, daß die Transponder in einem Seitenband abstrahlen, das durch die Wechselwirkung der Transponderelemente mit der einfallenden Strahlung erzeugt wird

Aktive Transponder können beispielsweise so ausgestaltet sein, daß sie die von einer Sendeantenne in Form von elektromagnetischen Wellen abgestrahlte Energie empfangen, diese Energie zwischenspeichern, beispielsweise in einem Kondensator, und anschließend aktiv einen speziellen, für den jeweiligen Transponder eindeutigen Code abstrahlen, der wiederum von einer Antenne empfangen werden kann. Es ist auch denkbar, Transponder mit eigener Stromversorgung in Form einer kleinen Batterie zu versehen, die dann lediglich durch einen Sendeimpuls angeregt werden, für eine gewissen Zeit ihrerseits den jeweiligen Code abzustrahlen.

Während die vorliegende Erfindung bei all diesen Arten von Transpondem anwendbar ist, so ist sie jedoch vornehmlich auf die Verwendung mit passiven Transpondem gerichtet, weil bei diesen die hier zu lösenden Probleme besonders zutage treten.

Es versteht sich, dass der Empfang der durch den Transponder modifizierten oder aktiv ausgestrahlten Signale auf einen bestimmten Bereich beschränkt ist, der von der Sendeleistung der Antenne (oder auch des Transponders), ihrer Empfindlichkeit sowie der Ausrichtung des Transponders relativ zu der Antenne bzw. den abgestrahlten elektromagnetischen Wellen und schließlich auch vom Abstand des Transponders von der Antenne abhängt. Der Messabstand des Transponders wird aufgrund der Verwendung von Gates, d. h. Durchgangsbereichen mit definierten Abmessungen auf bestimmte Maximalwerte eingestellt. Die Sendeleistung (oder Empfindlichkeit) der Antenne wird entsprechend angepasst, so dass jeder das Gate passierende Transponder unabhängig von der Einhaltung sonstiger Parameter, wie zum Beispiel einer optimalen Orientierung des Transponders, mit Sicherheit erfasst wird. Es versteht sich, dass dabei unter Umständen aber auch Transponder, die außerhalb des Gates und deutlich weiter entfernt sind, also das betreffende Gate überhaupt nicht passieren, von der Antenne eines Gates erfasst werden, wenn sie zum Beispiel gerade relativ günstig zu der Gateantenne ausgerichtet sind. Dies führt zu unerwünschten Fehlinformationen.

Während die elektronische Erfassungs- und Auswertetechnik inzwischen so weit fortgeschritten ist, daß innerhalb sehr kurzer Zeit eine Vielzahl verschiedener Gegenstände bzw. die entsprechenden Transponder erkannt werden, wenn sie gleichzeitig oder nahezu gleichzeitig, beispielsweise auf der Ladefläche eines Lkw, durch ein Gate hindurchtransportiert werden, stellt jedoch die wechselseitige Störung benachbarter Gates bzw. die Erfassung von Transpondem, die durch benachbarte Gates hindurch oder in der Nähe an einem Gate vorbei transportiert werden, ein erhebliches Problem dar. Teilweise kann man dieses Problem dadurch lösen, daß man jedem Gate einen bestimmten UHF-Kanal zuordnet. Allerdings ist das für die Erfassung von Transpondem nach nationalen und internationalen Regeln zur Verfügung stehende Frequenzband im Bereich von 865MHz relativ schmal und jeder einzelne Kanal des insgesamt nur 2 MHz breiten Frequenzbandes benötigt seinerseits eine ausreichende Bandbreite, um die codierten Informationen in der oft nur sehr kurzen, zur Verfügung sehenden Zeit zu übertragen und auszuwerten.

Wenn also die Zahl der lokal in einem engeren Umfeld vorhandenen Transpondergates größer ist als die Zahl der zur Verfügung stehenden Kanäle, so müssen notwendigerweise einige der Transpondergates mit denselben Frequenzen arbeiten. Auch besteht die Gefahr, daß bei hinreichend starken Signalen ein Übersprechen von benachbarten Kanälen auftritt. Eine Lösung dieses Problems besteht darin, die einzelnen Transpondergates bzw. deren Antennen im Zeitmultiplex zu betreiben. Dies bedeutet aber notwendigerweise, daß jedes der Transpondergates immer nur für eine kurze Zeitdauer aktiv ist und dazwischen größere Totzeiten bestehen, innerhalb welcher durch das Gate hindurchtretende Transponder nicht erfaßt werden können. Dies schränkt selbstverständlich die Kapazität der Gates beträchtlich ein und kann dazu führen, daß pro Zeiteinheit erheblich weniger durch die Gates hindurchtretende Transponder erfaßt werden können oder gar manche Transponder unbemerkt ein Gate passieren. Das Problem der für eine Erfassung günstig plazierten, aber dennoch nicht durch ein Gate hindurchbewegten Transponder, die somit irrtümlich registriert werden, wird im Übrigen durch keinen der vorstehend erläuterten Ansätze gelöst.

Gegenüber diesem Stand der Technik liegt der vorliegenden Erfindung die Aufgabe zugrunde, ein Transpondergate zu schaffen, bei welchem die Gefahr wechselseitiger Störungen mit benachbarten Gates und den durch diese hindurchtretenden Transpondem, ebenso wie die Gefahr einer irrtümlichen Erfassung nur in der Nähe aber außerhalb eines Gates bewegter Transponder beträchtlich verringert ist.

Diese Aufgabe wird dadurch gelöst, daß der den Durchtrittsbereich des Transpondergates abdekkende Erfassungsbereich der jeweiligen Antenne begrenzt ist durch zwei im Abstand voneinander auf den beiden Seiten des Durchtrittsbereichs angeordnete Spiegel, von welchen mindestens einer als konkaver Spiegel und der andere wahlweise als ebener oder als konkaver Spiegel ausgebildet ist, und die ein elektromagnetische Wellen reflektierendes Material aufweisen und mit ihren reflektierenden (konkaven) Seiten einander zugewandt sind, wobei die mindestens eine Antenne in einem Brennpunktbereich des mindestens einen konkaven Spiegels angeordnet ist.

Im Hinblick auf die Gateantenne wird die der Erfindung zugrunde liegende Aufgabe dadurch gelöst, daß die Gateantenne neben einem aktiv sendenden und/oder empfangenden Antennenelement einen konkaven Spiegel für die von dem Antennenelement ausgehende bzw. die von dem Antennenelement zu empfangende Strahlung aufweist.

Die im Brennpunkt bzw. Brennpunktbereich eines konkaven Spiegels angeordnete Antenne gibt elektromagnetische Strahlung entweder weitgehend isotrop oder aber mit einer gewissen Richtcharakteristik ab, wobei Antennen mit der letztgenannten Eigenschaft bevorzugt verwendet werden. Auf jeden Fall strahlt eine solche Antenne elektromagnetische Strahlung aus dem Brennpunktbereich, in welchem Sie angeordnet ist, in Richtung des konkaven Spiegels ab, von wo diese Strahlung in nahezu paralleler Form bzw. unter einem sehr begrenzten Raumwinkel von der Oberfläche des konkaven Spiegels weg und zurück reflektiert wird, und zwar, entsprechend der Ausrichtung des Spiegels, genau in Richtung des vorgesehenen Erfassungsbereichs für die Transponder, welcher den Durchtrittsbereich abdeckt.

Da nun aber diese Strahlung von dem konkaven Spiegel unter einem sehr kleinen Raumwinkel bzw. im Idealfall in nahezu paralleler Form abgestrahlt wird, fängt ein entsprechender, gegenüberliegend angeordneter konkaver oder ebener Spiegel diese Strahlung nahezu vollständig ab und reflektiert sie nun wiederum in Richtung seines Brennpunkts oder zu dem erstgenannten, konkaven Spiegel zurück. In dem Brennpunkt kann entweder eine Empfangsantenne angeordnet sein oder aber eine Antenne mit einem Absorber.

Befindet sich in dem Erfassungsbereich zwischen den beiden Antennen ein Transponder, so modifiziert dieser die von dem einen Spiegel zum anderen reflektierte und in diesem Bereich zwischen den Spiegeln konzentrierte elektromagnetische Strahlung, was wiederum von der Empfangsantenne, die mit der sendenden Antenne identisch sein kann, erfaßt wird, wobei diese modifizierte Strahlung an eine Auswerteelektronik weitergeleitet und decodiert wird. Der Begriff "Antenne" wird im Rahmen der vorliegenden Beschreibung in einem zweifachen Sinne verwendet, wobei die jeweilige Bedeutung sich jedoch ohne weiteres aus dem Zusammenhang ergibt, nämlich zum einen in dem engeren Sinne des aktiv Strom in elektromagnetische Strahlung umwandelnden Elementes oder umgekehrt empfangene Strahlung in elektrischen Strom bzw. Spannung umwandelnden Elementes, und zum anderen im Sinne der Gateantenne, die den zugehörigen konkaven Spiegel mit umfasst.

Aufgrund der Tatsache, daß die von der Sendeantenne ausgehende elektromagnetische Strahlung durch die konkave Spiegeloberfläche zurückgeworfen und dabei sehr stark gebündelt und auf einen kleinen Raumwinkel konzentriert wird, der im wesentlichen den zwischen den beiden gegenüberliegenden Spiegeln liegenden Raumbereich als Erfassungsbereich definiert, kommt man für eine zuverlässige Erkennung der durch diesen Bereich hindurchbewegten Transponder mit einer erheblich geringeren Sendeleistung aus als dies bei herkömmlichen Transpondergate der Fall war. Gleichzeitig gelangt schon aufgrund der geringeren Sendeleistung und dadurch, daß die von dem ersten Spiegel ausgehende Strahlung zum größten Teil durch den zweiten Spiegel abgefangen wird, erheblich weniger Störstrahlung in den Bereich außerhalb des betreffenden Gates oder in den Bereich benachbarter Gates. Auch die durch die Transponder modifizierte Strahlung wird zum größten Teil von den beiden Spiegeln abgefangen, welche das betreffende Transpondergate definieren, durch welches der Transponder gerade hindurchbewegt wird und gelangt auf diese Weise nicht oder nur in extrem abgeschwächter Form zu dem Antennen benachbarter Gates. Dies erlaubt es, daß in einem gegebenen Gate in eindeutiger Weise nur diejenigen Transponder erfaßt werden, die auch tatsächlich durch dieses Gate hindurchtransportiert werden. Gleichzeitig kann das Gate ununterbrochen betrieben werden und braucht nicht im Zeitmultiplex mit anderen Gates zu arbeiten.

Auch eine Aufteilung des zur Verfügung stehenden Frequenzbandes auf mehrere Kanäle ist nicht unbedingt erforderlich. Um jedoch auch letzte Reste an möglichen Störungen sicher auszuschließen, können zumindest unmittelbar benachbarte Gates mit unterschiedlichen Frequenzen bzw. in unterschiedlichen Kanälen betrieben werden, wofür man nur wenige verschiedene Kanäle benötigt, so dass diese eine relativ große Bandbreite haben können, was wiederum die Übertragung umfangreicher, codierter Informationen ermöglicht.

In einer ersten, einfachen Ausführungsform der Erfindung können die beiden Spiegel unterschiedlich konkav gekrümmt sein, und zwar so, daß sie einen gemeinsamen, zu der Seite eines Spiegels hin einseitig verschobenen Brennpunktbereich haben.

Der Begriff "Brennpunktbereich" wird im Unterschied zu dem exakteren Begriff "Brennpunkt" hier bewußt verwendet, weil es nicht darauf ankommt, daß die Antennen wirklich einen geometrisch exakt definierten, räumlich sehr eng begrenzten Brennpunkt haben, sondern es vielmehr ausreicht, wenn auf den Spiegel auftreffende, parallele Strahlen auf jeden Fall innerhalb eines relativ kleinen Raumbereichs konzentriert werden, in dem auch die jeweilige Antenne angeordnet ist. Dieser Bereich muß auch nicht notwendigerweise kugelsymmetrisch sein oder die Form eines Ellipsoids haben, sondern kann beispielsweise auch lang gestreckt die Form eines mehr oder weniger zylindrischen oder eines anderen lang gestreckten Bereichs mit nicht-zylindrischem, beispielsweise elliptischem, Querschnitt haben.

Im Fall zweier Antennen mit einem gemeinsamen Brennpunktbereich, der einseitig zu einer der Antennen hin verschoben ist, weist der letztgenannte Spiegel eine stärkere Krümmung auf und hat in seinem Brennpunktbereich die Sende- und Empfangsantenne. Die Strahlung, die in Richtung dieses ersten Spiegels abgegeben wird, wird von diesem Spiegel in etwa parallel zu dem gegenüberliegenden Spiegel reflektiert, der eine schwächere konkave Krümmung hat und der wiederum diese nunmehr auf ihn parallel auftreffenden, elektromagnetischen Strahlen bündelt und in Richtung des gemeinsamen Brennpunktbereichs zurückreflektiert. Wenn dabei ein Transponder diesen durchstrahlten Bereich zwischen den beiden Spiegeln durchquert, ist die von dem zweiten Spiegel zurückreflektierte Strahlung entsprechend modifiziert und kann von der Antenne als solche erfaßt und weitergeleitet bzw. ausgewertet werden.

Bevorzugt ist jedoch eine Ausführungsform der Erfindung, bei welcher die beiden Spiegel im wesentlichen identisch ausgebildet sind. Die Spiegel können unterschiedliche Formen annehmen. Beispielsweise können sie in einer Draufsicht auf ihre Fläche rechtwinklig, kreisförmig oder auch elliptisch erscheinen. Die konkave Krümmung kann dabei in zwei zueinander senkrechten Ebenen vorliegen, es reicht jedoch für die meisten praktischen Fälle aus, wenn der betreffende Spiegel in nur einer Ebene konkav gekrümmt verläuft und sich in einer dazu senkrechten Richtung im wesentlichen gerade, d.h. ohne Krümmung erstreckt. Eine solche Antenne bzw. einen solchen Antennenspiegel stellt man in der Praxis vorzugsweise in der Weise auf, daß daß der Spiegel in einer horizontalen Ebene konkav gekrümmt ist, während er in der vertikalen nicht gekrümmt ist. Dies bedeutet, daß der Brennpunktbereich eines solchen Spiegels einer vertikal ausgerichteten Linie bzw. einem vertikal ausgerichteten Zylinder entspricht. Dabei werden die von einer Antenne vom Brennpunktbereich ausgehenden und auf den Spiegel geworfenen Strahlen im wesentlichen nur in horizontaler Richtung gebündelt, während ein Teil der Strahlung, nämlich der von der mehr oder weniger punktförmigen Antenne schräg nach oben oder unten auf den Spiegel abgestrahlt hat, entsprechend schräg nach oben oder unten reflektiert wird. In diesem Bereich kann man aber beispielsweise absorbierendes Material anordnen, zumal üblicherweise oberhalb oder unterhalb eines Gates ohnehin keine Transponder vorbeibewegt werden, so daß also diese Streustrahlung nicht weiter stört. In horizontaler Richtung verhindert man aber auf jeden Fall ein Auffächern der Strahlung aufgrund der Bündelung durch den Spiegel und der gegenüberliegende Spiegel fängt diese Strahlung wiederum auf.

Zweckmäßigerweise folgt die konkave Krümmung des Spiegels dem Verlauf einer Parabel, wobei allerdings auch kreisförmige oder elliptische Krümmungen möglich sind. Selbstverständlich sind auch in zwei zueinander senkrechten Ebenen gekrümmte Spiegel möglich und verwendbar, wobei derartige Spiegel auch in den beiden zueinander senkrechten Ebenen unterschiedliche Krümmungen haben können.

Einer der beiden Spiegel kann im übrigen auch eben ausgebildet sein, da ein ebener Spiegel die von dem gegenüberliegenden, konkaven Spiegel ausgehenden, parallelen Strahlen im wesentlichen in die gleiche Richtung zurück und damit in Richtung der abstrahlenden Antenne reflektiert, die gleichzeitig als Empfangsantenne dient.

Wahlweise kann bei Verwendung zweier konkaver Spiegel im Brennpunkt einer dieser Spiegel eine Antenne mit einem Absorberwiderstand angeordnet sein, welcher die an der Antenne empfangene Energie absorbiert. Die gegenüberliegend angeordnete Antenne dient dann sowohl als Sende- als auch als Empfangsantenne.

Zweckmäßigerweise besteht ein Gate aus einem torähnlichen Gebilde, das neben zwei vertikalen Wänden, die dazwischen den Durchtrittsbereich definieren und die Antennen und die Spiegel enthalten, auch noch eine obere, den Bereich zwischen den Antennen überspannende Deckwand aufweisen, welche ein absorbierendes Material aufweist, so daß nach oben abgelenkte Streustrahlung in dieser absorbierenden Deckwand vernichtet wird und so bei anderen Gates keine Störungen verursachen kann und auch keine etwa oberhalb des Tores befindlichen Transponder erfaßt.

Die Maße eines solchen Gates sind selbstverständlich den konkreten Bedingungen und Bedürfnissen anzupassen. Bei manchen Anwendungen in Lagern, wo beispielsweise nur kleine Fahrzeuge die Gatebereiche passieren müssen, reicht es im allgemeinen aus, wenn die lichte Weite des Gates 2 bis 2,5 m oder die Höhe des Gates mehr als 2 m, insbesondere etwa 2,50 m beträgt. Bei anderen Anwendungen ist es jedoch erforderlich, daß Lkws die Gates passieren können und demzufolge sollte die lichte Weite eines entsprechenden Transpondergates mindestens 2,5 m betragen und die Höhe nach Möglichkeit mehr als 3 m, insbesondere etwa 4 m.

Als Antenne mit einer geeigneten Richtcharakteristik kann man beispielsweise eine YAGI-Antenne verwenden, wie sie in ihrem prinzipiellen Aufbau von zahlreichen Femsehantennen bekannt ist, wie sie in der Vergangenheit verwendet wurden und auch heute noch zahlreich Anwendung finden.

Weitere Vorteile, Merkmale und Anwendungsmöglichkeiten der vorliegenden Erfindung ergeben sich aus der folgenden Beschreibung eines bevorzugten Ausführungsform und der dazugehörigen Figuren. Es zeigen:
- Figur 1: eine schematische Ansicht auf ein Transpondergate von oben,
- Figur 2: eine Vorderansicht eines Transpondergates,
- Figur 3: ein Antennengehäuse eines Transpondergates mit einer Antenne in zwei möglichen Anordnungen,
- Figur 4: ein Transpondergate mit der Darstellung des Erfassunngsbereiches in einer Ansicht von oben,
- Figur 5: eine alternative Ausführungsform eines Transpondergates mit zwei Parabolspiegeln, und
- Figur 6: eine Reihe mehrerer nebeneinander angeordneter Transpondergates

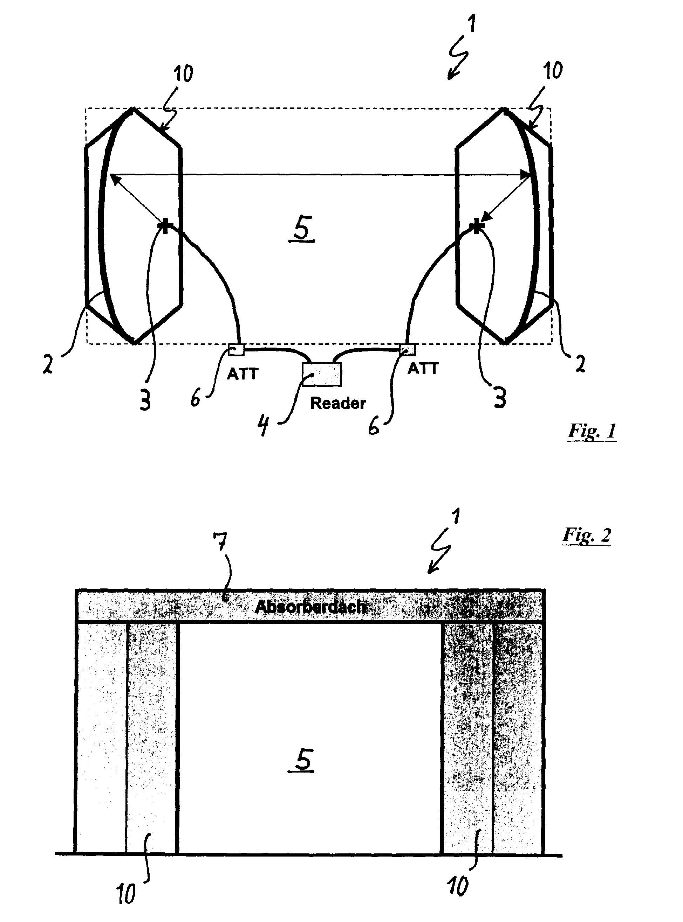

In Figur 1 erkennt man schematisch in einer Ansicht von oben ein Transpondergate 1, dessen seitliche Begrenzungen durch zwei in der Draufsicht länglich achteckige Gehäuse 10 gebildet werden, die in ihrem Inneren jeweils einen Parabolspiegel 2 aufnehmen, wobei diese konkaven Spiegel 2i allerdings nur in der horizontalen Ebene, welche der Papierebene entspricht, in etwa parabelförmig gekrümmt verlaufen, während sie in der Richtung senkrecht dazu, d.h. in der vertikalen, keine Krümmung aufweisen. In Form eines Kreuzes angedeutet ist die Position jeweils einer Antenne 3, die sich in etwa im Brennpunktbereich jedes der konkaven Spiegel 2 befinden, wobei dieser Brennpunktbereich allerdings einer senkrecht zur Papierebene verlaufenden vertikalen Linie entspricht, die in der hier dargestellten Draufsicht nur als Punkt bzw. als Zentrum des Kreuzes erscheint.

Es versteht sich, daß die Spiegel 2 auch in der horizontalen Ebene nicht exakt parabelförmig ausgebildet sein müssen und daß der Brennpunkt keine exakt definierte Linie sein muß, sondern im Querschnitt ein mehr oder weniger verschwommener, kleiner zylindrischer oder elliptisch geformter Bereich sein kann.

Die Antennen 3 sind mit einer Sende- und Empfangseinrichtung 4 (auch als READER bezeichnet) sowie mit zwei zugehörigen Dämpfungsgliedern 6 (auch als ATT bezeichnet) ausgestattet, die als Absorberwiderstände fungieren. Die Sende- und Empfangseinrichtung weist vorzugsweise auf mindestens einer Seite einen Umschalter und einen Abschlußwiderstand auf, um eine Rückstrahlung der eingestrahlten Energie zu verhindern, wenn beispielsweise die Empfangseinrichtung der gegenüberliegenden Antenne 3 arbeitet.

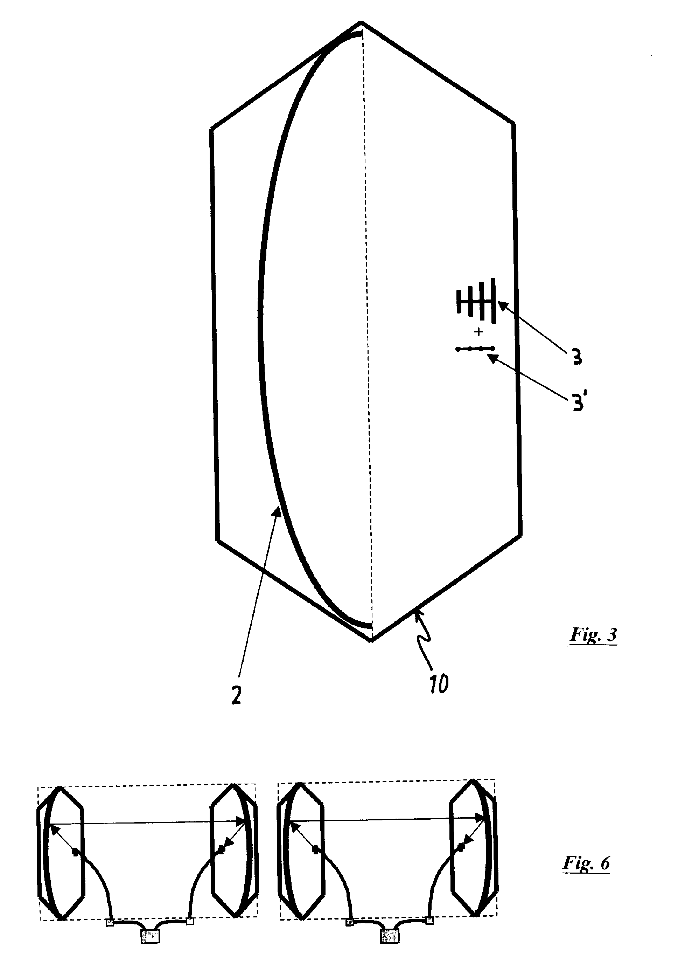

Als Antennen 3 können zweckmäßigerweise YAGI-Antennen verwendet werden, die entweder in der Ebene der Krümmung oder senkrecht hierzu, d.h. horizontal oder vertikal, angeordnet werden können, wie es in Figur 3 durch Antennen 3, 3' angedeutet wird, auf jeden Fall ab er so, daß sie jeweils in Richtung der Spiegel 2 abstrahlen und empfangen.

Es können wahlweise auch mehrere Antennen vertikal übereinander angeordnet werden, um den Raum zwischen den Spiegeln in der Vertikalen noch besser abzudecken.

Der UHF-Reader 4 kann mit bis zu vier Antennen betrieben werden. Dabei werden über einen Antennenumschalter die Antennen nacheinander aktiviert. In dem erfindungsgemäßen UHF-Gate wird die HF-Energie von einer Antenne 3 über die eine Reflektionswand (Spiegel 2) abgestrahlt und mit der gegenüberliegenden Reflektionswand (Spiegel 2) wieder gebündelt an die weitere Antenne 3 geleitet. Damit diese die nicht mehr benötigte Energie nicht durch Fehlanpassung der nicht aktivierten Antenne in den freien Raum bzw. in das Gate zurückgestrahlt wird, muß in der Antennenzuleitung ein Dämpfungsglied liegen, um die Energie in Wärme umzusetzen. Dadurch werden Leselöcher durch Reflektionen zwischen den Wänden verringert. Durch den größeren Antennengewinn wird die erforderliche Sendeleistung durch den Reader kleiner, was die unerwünschte Abstrahlung in den freien Raum reduziert. Da der Reflektor nur in einer Ebene gekrümmt ist, ist die Anwendung von linear polarisierten Antennen am günstigsten. Soll die unerwünschte Abstrahlung noch weiter reduziert werden, so kann zwischen den Reflektorwänden noch ein Dach 7 mit HF-Absorbern installiert angebaut werden.

In Figur 2 erkennt man ein entsprechendes Transpondergate in einer Ansicht von vom. Rechts und links sind wieder die beiden Gehäuse 10 zu erkennen, in welchen die Antennen 3 und die Parabolspiegel 2 aufgenommen sind. Der Durchtrittsbereich 5 wird durch ein Absorberdach 6 überspannt, welches nach oben reflektierte Streustrahlung absorbiert.

In Figur 6 sind schematisch nochmals in einer Draufsicht mehrere nebeneinander angeordnete Transpondergates dargestellt, die sich wechselseitig nicht stören, da die jeweils benachbarten Parabolspiegel benachbarter Gates mit ihren Rückseiten zueinander angeordnet sind und die von den gegenüberliegenden Spiegeln reflektierte Strahlung abfangen und in Richtung ihrer Empfangsantenne reflektieren, so daß praktisch keine Strahlung in den Bereich des Nachbargates gelangen kann.

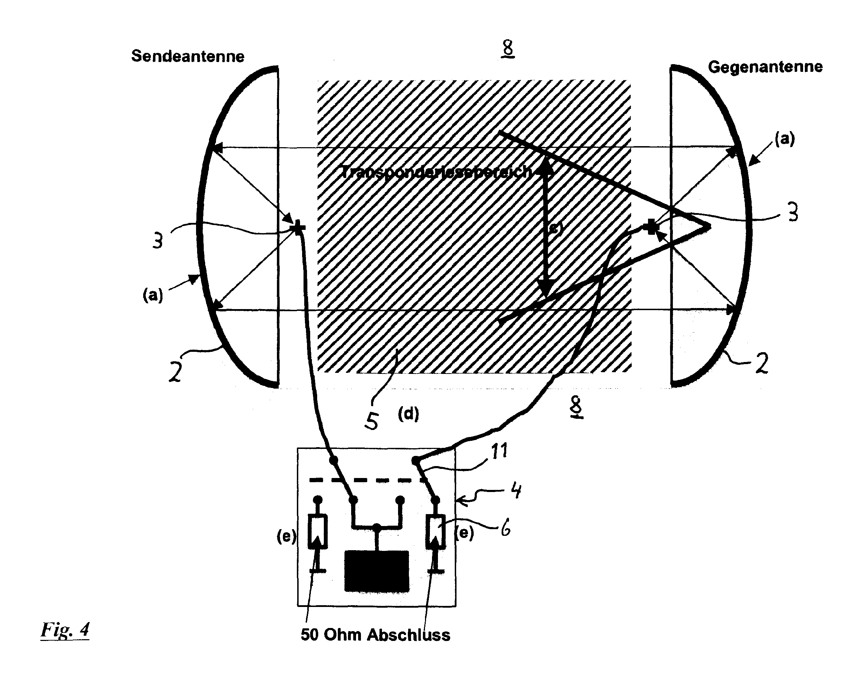

In Figur 4 ist nochmals ein entsprechendes Transpondergate mit dem Durchtritts- und Erfassungsbereich 5 und mit weiteren Details wiedergegeben. Als Durchtrittsbereich (in Figur 4 als "Transponderlesebereich" bezeichnet) wird dabei der gesamte von den beiden Gehäusen 10 und dem Absorberdach 7 begrenzte Bereich 5 bezeichnet (siehe Figur 2). Der Erfassungsbereich, ist hingegen der gesamte Raum der sich durch Verbindung der Außenkonturen der beiden gegenüberliegenden Spiegel 2, einschließlich des von den Spiegeln umfassten Hohlraums, ergibt. Außerhalb der Gehäuse 10 stimmen deshalb Durchlass- und Erfassungsbereich miteinander überein. Der vor und hinter dem Gate, d.h. vor und hinter dem Erfassungsbereich 5, liegende Außenbereich ist der unerwünschte Lesebereich, d.h., Transponder, die sich in diesem Bereich, der mit 8 bezeichnet ist, befinden, sollen nach Möglichkeit nicht erfaßt werden. Dies wird zum einen dadurch erreicht, daß durch die konkave Ausgestaltung der Spiegel 2 und durch die Positionierung der Sendeantenne 3 im Brennpunktbereich des konkaven Spiegels 2 die von der Sendeantenne 3 ausgehende Strahlung relativ stark gebündelt und auf den Transponder-Lesebereich 5 konzentriert wird. Auch durch Reflexion gelangt kaum Strahlung in den unerwünschten Lesebereich 8 vor und hinter dem Gate, da die von der Sendeantenne ausgehende Strahlung von dem Spiegel 2 der Gegenantenne aufgefangen und in Richtung der in deren Brennbereich angeordneten Antenne abgefangen wird. Diese, auf der gegenüberliegenden Seite der Sendeantenne angeordnete Antenne 3 ist wiederum mit einem Abschlußwiderstand 6 verbunden, in welchem die von der Antenne aufgenommene Strahlungsenergie in Wärme umgewandelt wird.

Außerdem ist die Strahlungsenergie der Sendeantenne, die dennoch in geringem Maß und aufgrund von Reflexionen oder Ungenauigkeiten der Spiegelform in den Außenbereich 8 gelangt, relativ schwach und regt einen angeordneten Transponder auch nur entsprechend schwach zur Abstrahlung von Energie an. Diese von dem Transponder im Außenbereich abgestrahlte ohnehin schon schwache Energie wird wiederum, wenn sie auf den Spiegel (des benachbarten oder irgend eines anderen wieter entfernten Transpondergates) auftrifft, nicht oder nur in sehr geringem Maß auf die Antenne 3 reflektiert, so daß das an der Antenne ankommende Transpondersignal eines im Außenbereich 8 angeregten Transponders so stark geschwächt ist, daß es als solches nicht mehr erfaßt wird bzw. leicht von einem tatsächlich im Lesebereich befindlichen Transponder unterschieden werden kann.

Wie man sieht, ist die Lese- und Empfangselektronik so ausgestaltet, daß über zwei Schalter 11 wahlweise die linke oder die rechte Antenne mit je einem Abschlußwiderstand 6 verbunden werden kann, so daß die beiden Antennen ihre Rolle als Sende- und Absorberantennen auch vertauschen können.

Die Sendeantenne dient im übrigen auch gleichzeitig als Empfangsantenne für die von dem Transponder ausgehende, modifizierte Strahlung, wobei die Empfangs- und Auswerteelektronik 4 in der Lage ist, die Sendefrequenz der Antenne von der Seitenbandfrequenz, mit welcher die von dem Transponder modifizierte Strahlung abgestrahlt wird, getrennt werden kann, um damit eine eindeutige Identifizierung eines Transponders zu ermöglichen.

Falls bei Verwendung von Spiegeln, die nur in einer Ebene gekrümmt, in der anderen (vertikalen) Ebene jedoch nicht gekrümmt sind, zu viel Streustrahlung in einen Außenbereich gelangt, in welchem sich möglicherweise doch Transponder befinden können, kann man ohne weiteres auf konkave Spiegel ausweichen, die in beiden Ebenen gekrümmt sind und die auch die von der Antenne schräg nach oben oder unten ausgehende Strahlung entsprechend bündeln und somit die Streustrahlung noch stärker reduzieren. Im allgemeinen reicht es jedoch aus, wenn der Außenbereich in horizontaler Richtung vor und hinter dem Gate weitgehend von Streustrahlung frei ist, da die Transponder in der Regel horizontal innerhalb eines beschränkten Höhenbereichs durch das Gate hindurch transportiert werden.

Die Antennen sind, wie bereits erwähnt, vorzugsweise Antennen mit Richtcharakteristik und im Fall einer Verwendung von nur in einer Ebene gekrümmten Spiegeln können insbesondere auf der Seite der Gegenantenne mehrere Antennen vertikal übereinander entlang der Brennlinie angeordnet sein, um die reflektierte Strahlung möglichst vollständig zu absorbieren.

Selbstverständlich können auch auf der Sendeseite mehrere Antennen entlang der Brennlinie angeordnet sein. Die Antennen können zweckmäßigerweise als YAGI-Antenne, als Patch-Antenne oder auch als Kreuz-YAGI-Antenne ausgebildet sein.

Typische Maße für die Parabolspiegel sind eine Breite von zum Beispiel 1,50 m und eine Höhe von zum Beispiel 2,50 m, wobei die Höhe des Gates, definiert durch die Höhe der seitlichen Gehäuse 10 (unterhalb des Absorberdaches 7), im wesentlichen mit der Höhe der Parabolspiegel 2 übereinstimmt. Um sowohl den Spiegel 2 als auch die Antenne 3 in einem einzigen Gehäuse unterbringen zu können, haben die einzelnen Gehäuse 10 eine in Richtung der Breite des Gates gemessene Breite von zum Beispiel 750 mm. Während die Tiefe der Gehäuse 10 im wesentlichen der Breite der Spiegel 2 entspricht und somit die Tiefe des Gates und des Durchlassbereiches 5 definiert, wie man anhand der Figuren 1, 3 und 4 erkennen kann. Es versteht sich. daß diese Maße für dieselben oder auch für andere Anwendungen beliebig variiert werden können. Außerdem müssen nicht notwendigerweise geschlossene Gehäuse 10 verwendet werden, sondern die Spiegel und Antennen können auch an offenen Rahmen oder Gestellen befestigt sein oder selbsttragend ausgebildet sein.

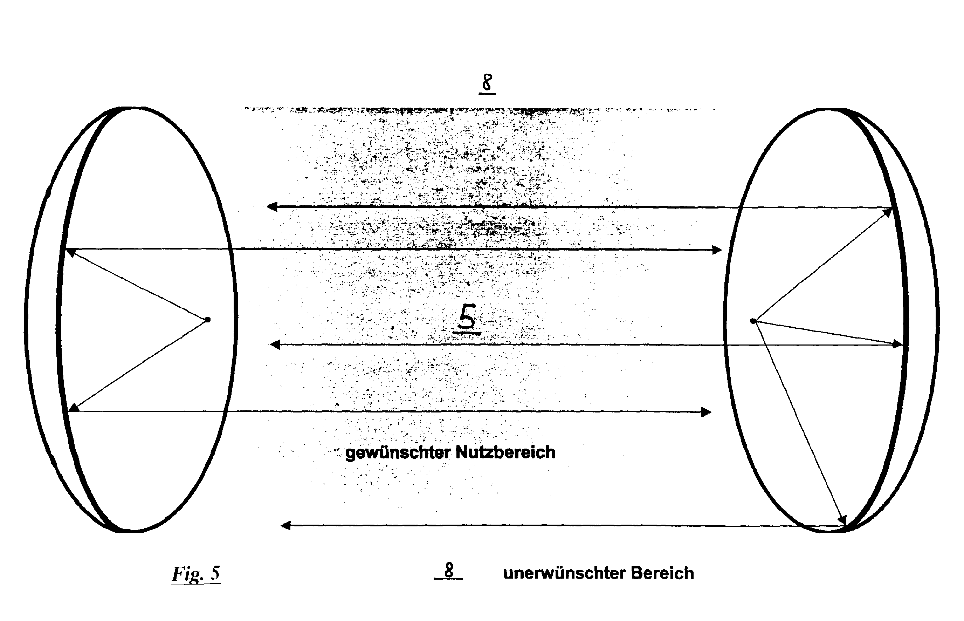

In Figur 5 ist nochmals eine alternative Ausführungsform eines Transpondergates dargestellt, bei welchem echte Parabolspiegel, d.h. in zwei zueinander senkrechten Ebenen gekrümmte Spiegel verwendet werden, wobei die Krümmung allerdings in vertikaler und in horizontaler Richtung auch unterschiedlich sein kann, um einen gewünschten Querschnitt eines Erfassungsbereichs abzudekken.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

## Patentansprüche

1. Transpondergate (10) bestehend aus mindestens einer Antenne (1) und einem in der Nähe der Antenne definierten Durchtrittsbereich (5), wobei die Antenne (1) dafür ausgelegt ist, die von einem den Durchtrittsbereich (5) durchquerenden Transponder (3) ausgehenden oder modifizierten, codierten Signale zu erfassen und an eine Auswerteelektronik (4) weiterzuleiten, **dadurch gekennzeichnet, daß** der den Durchtrittsbereich (5) abdeckende Erfassungsbereich der Antenne (1) begrenzt ist durch zwei im Abstand voneinander auf den beiden Seiten des Durchtrittsbereichs (5) angeordnete Spiegel (2), die ein elektromagnetische Wellen reflektierendes Material aufweisen und von denen mindestens einer konkav ausgebildet ist und die mit ihren spiegelnden Seiten einander zugewandt sind, um dazwischen den Erfassungs- und Durchtrittsbereich zu definieren, wobei die mindestens eine Antenne in einem Brennpunktbereich des mindestens einen konkaven Spiegels (2) angeordnet ist während der andere Spiegel (2) entweder eben oder ebenfalls konkav ausgebildet ist.

2. Transpondergate nach Anspruch 1, **dadurch gekennzeichnet, daß** die Spiegel (2) so ausgebildet und angeordnet sind, daß sie einen zur Seite eines Spiegels (2) hin einseitig verschobenen, gemeinsamen Brennpunktbereich haben.

3. Transpondergate nach Anspruch 1, **dadurch gekennzeichnet, daß** je eine Antenne (3) in den räumlich voneinander beabstandeten und beidseitig des Durchtrittsbereichs (5) angeordneten Brennpunktbereichen der beiden Spiegel (2) angeordnet ist.

4. Transpondergate nach einem der Ansprüche 1 bis 3, **dadurch gekennzeichnet, daß** beide Spiegel im wesentlichen identisch ausgebildet sind.

5. Transpondergate nach einem der Ansprüche 1 bis 4, **dadurch gekennzeichnet, daß** die Spiegel in der Draufsicht auf die Spiegelfläche eine rechtwinklige, kreisförmige oder elliptische Umfangskontur haben.

6. Transpondergate nach einem der Ansprüche 1 bis 5, **dadurch gekennzeichnet, daß** die Spiegeloberfläche in zueinander senkrechten Ebenen gleiche oder unterschiedliche Krümmungen aufweist.

7. Transpondergate nach Anspruch 6, **dadurch gekennzeichnet, daß** die Spiegeloberfläche in einer der genannten Ebenen, vorzugsweise in einer vertikalen Ebene, nicht gekrümmt bzw. gerade verläuft.

8. Transpondergate nach einem der Ansprüche 1 bis 7, **dadurch gekennzeichnet, daß** das im Brennpunktbereich angeordnete Antennenelement eine Richtcharakteristik hat und hauptsächlich in Richtung des zugeordneten, konkaven Spiegels abstrahlend angeordnet ist.

9. Transpondergate nach einem der vorstehenden Ansprüche, **dadurch gekennzeichnet, daß** das Antennenelement im Abstand zu der Spiegeloberfläche in dessen Brennpunktbereich und in etwa vor dem Mittelpunkt der Spiegelfläche angeordnet ist.

10. Transpondergate nach einem der Ansprüche 1 bis 9, **dadurch gekennzeichnet, daß** in Falle zweier an einem Gate auf gegenüberliegenden Seiten vorgesehener Antennen der Ausgang einer dieser Antennen mit einem Absorberwiderstand verbunden ist.

11. Transpondergate nach einem der Ansprüche 1 bis 10, **dadurch gekennzeichnet, daß** der Abstand der einander zugewandten Spiegel eines Transpondergates mindestens 2,5 m beträgt und daß die Höhe des Gates mehr als 2 m, vorzugsweise mehr als 2,50 m und insbesondere mehr als 3 m aufweist.

12. Transpondergate nach Anspruch 11, **dadurch gekennzeichnet, daß** der lichte Abstand zwischen gegenüberliegenden Gehäusen (10) der Gateantennen (3) mindestens 2,5 m, vorzugsweise etwa 3 m beträgt und daß oberhalb des Durchtrittsbereichs eine den Bereich zwischen den Antennen (3) bzw. Gehäusen (10) überspannende Absorberwand (7) vorgesehen ist.

13. Transpondergate nach einem der vorstehenden Ansprüche, **dadurch gekennzeichnet, daß** als Antenne (3) eine YAGI-Antenne vorgesehen ist.

14. Gateantenne für eine Transpondergate, insbesondere zur Verwendung in einem Transpondergate nach einem der Ansprüche 1 bis 14, **dadurch gekennzeichnet, daß** sie ein aktiv Strom in elektromagnetische Strahlung umwandelndes Antennenelement im Brennpunktbereich eines konkaven Spiegels aufweist.

15. Gateantenne nach Anspruch 14, **dadurch gekennzeichnet, daß** sie die Merkmale der Antennen nach einem der Ansprüche 1 - 13 aufweist.
